# EUROPÄISCHE PATENTSCHRIFT

(11) **EP 4 559 033 B1**
(45) Veröffentlichungstag und Bekanntmachung des Hinweises auf die Patenterteilung: **28.01.2026**
(21) Anmeldenummer: 23758217.6
(22) Anmeldetag: 20.07.2023
(51) Int. Cl.: H01M 8/04225, H01M 8/04302, H01M 8/04537, H01M 8/04746, H01M 8/04858

(54) **STEUERUNGSVERFAHREN ZUM HOCHFAHREN EINES BRENNSTOFFZELLENSYSTEMS**
CONTROL METHOD FOR STARTING A FUEL CELL SYSTEM
PROCÉDÉ DE COMMANDE DU DÉMARRAGE D'UN SYSTÈME DE PILE À COMBUSTIBLE

(30) Priorität: 21.07.2022 AT 505452022
(43) Veröffentlichungstag der Anmeldung: 28.05.2025
(73) Patentinhaber: AVL List GmbH, 8020 Graz (AT)
(72) Erfinder: WEINGRILL, David, 8152 Stallhofen (AT); KOGLER-LICHTENEGGER, Markus, 8511 St.Stefan ob Stainz (AT); VESTUM, Emil, 1152 Oslo (NO); AARSKOG, Fredrik, 1188 Oslo (NO)
(74) Vertreter: Gamper, Bettina
(86) Internationale Anmeldenummer: PCT/AT2023/060243
(87) Internationale Veröffentlichungsnummer: WO 2024/016042

(56) Entgegenhaltungen:
- EP-A1- 3 509 147
- DE-A1- 102019 119 622

## Beschreibung

Die vorliegende Erfindung betrifft ein Steuerungsverfahren zum Hochfahren eines Brennstoffzellensystems nach einem Stillstand, eine dementsprechende Steuerungsvorrichtung sowie ein Computerprogrammprodukt.

In Brennstoffzellensystemen zur Versorgung eines Verbrauchers mit Hochspannungs-Leistung, wie beispielsweise in einer stationären Anwendung oder einem Antriebsstrang mit großdimensioniertem elektrischen Antrieb für ein Nutzfahrzeug oder Schiff, wird in der Regel die Ausgangsspannung seitens der Brennstoffzellenstapel von einem Gleichspannungswandler auf das Spannungsniveau einer Hochspannungsversorgung für den Verbraucher erhöht bzw. geboostet.

Im Volllastbetrieb oder einem vorbestimmten Betriebsbereich ist zugunsten der Effizienz eine zu wandelnde Spannungsdifferenz des Gleichspannungswandlung niedrig ausgelegt. Um die zu wandelnde Spannungsdifferenz gering zu halten, muss die Ausgangsspannung der Brennstoffzellenstapel unter Last relativ hoch bzw. nah an die Versorgungsspannung des Verbrauchers ausgelegt werden. Im Falle von Brennstoffzellensystemen zur Versorgung mit Hochspannung bildet dabei eine maximal zulässige Betriebsspannung des Gleichspannungswandlers auf der Niedrigspannungsseite eine technische Beschränkung bei der Auslegung einer möglichst kleinen und effizient zu wandelnde Spannungsdifferenz im Lastbetrieb. Bei der halbleiterbasierten Leistungselektronik von Spannungswandlern liegt eine zulässige maximale Betriebsspannung beim derzeitigen Stand der Technik bei etwa 1200 V.

Wenn die Brennstoffzellenstapel von der elektrischen Last getrennt sind, wie beispielsweise bei einem Start des Brennstoffzellensystem, erzeugen diese eine Leerlaufspannung, welche eine Ausgangsspannung unter Last und insbesondere die maximale Betriebsspannung des Gleichspannungswandlers übersteigen kann. Wenn dieser Zustand während des Hochfahrens des Brennstoffzellensystems eintritt, würde der Gleichspannungswandler Schaden nehmen sobald eine elektrische Verbindung zwischen den Brennstoffzellenstapeln und dem Gleichspannungswandler geschlossen wird. Demnach besteht Bedarf an einer Technik zur Vermeidung von Überspannungsschäden an einem Gleichspannungswandler beim Hochfahren eines Brennstoffzellensystems im Hochspannungsbereich.

Andererseits sind im Stand der Technik Brennstoffzellensystem bekannt, die eine künstliche Last bzw. Dummy Load mit den Brennstoffzellenstapeln verbinden, wenn eine Leerlaufspannung sehr hoch wird, um diese zu senken und eine Beeinträchtigung der Lebensdauer der Zellen durch zu hohe Spannungen zu vermeiden. In diesem Zusammenhang kann es problematisch sein, wenn beim Hochfahren des Brennstoffzellensystems noch nicht alle Zellen um Stapel gleichmäßig bzw. ausreichend mit dem Brenngas versorgt sind, insbesondere wenn nach längerem Stillstand Luft im System ist, d.h. sowohl an der Kathode als auch an der Anode Sauerstoff ist. Wenn in diesem Zustand, bei dem ebenfalls eine hohe Leerlaufspannung erzeugt werden kann, eine Last angelegt wird, können an einzelnen Zellen unter Verarmung von Brennstoff Umpolungen bzw. eine Umkehr der Spannungspotenziale auftreten. Diese sind selbst bei kurzfristigem Auftreten erheblich schädlicher für die Lebensdauer der Zellen als vorübergehende hohe Leerlaufspannungen. Demnach besteht auch Bedarf an einer Technik, die das Auftreten derartiger Potenzialumkehrungen an Zellen sicher unterbindet.

DE102019119622 offenbart ein Steuerungsverfahren zum Hochfahren eines Brennstoffzellensystems mit einem Gleichspannungswandler zur Spannungserhöhung zwischen einer Ausgangsspannung der Brennstoffzelleneinheit und einer Versorgungsspannung eines Hochspannungsversorgungsabschnitts und eine Schaltvorrichtung zum Öffnen und Schließen einer elektrischen Verbindung zwischen der Last und dem Gleichspannungswandler.

Es besteht eine Aufgabe der Erfindung darin, eine Technik für das Hochfahren eines Brennstoffzellensystems zu schaffen, in der eine höhere Auslegung der Ausgangsspannung der Brennstoffzellenstapel unter Last möglich wird, insbesondere eine höhere Dimensionierung der Leistung, in deren Zusammenhang eine Leerlaufspannung der Brennstoffzellenstapel eine technisch begrenzte, maximale Betriebsspannung des Gleichspannungswandlers übersteigen kann. Es ist ferner eine Aufgabe der Erfindung, eine Technik für das Hochfahren eines Brennstoffzellensystems zu schaffen, die sowohl Überspannungsschäden an einem Gleichspannungswandler vermeiden als auch das Auftreten schädlicher Potenzialumkehrungen an Zellen sicher unterbinden kann.

Die voranstehende Aufgabe wird durch das Steuerungsverfahren mit den Merkmalen des Anspruchs 1 gelöst. Weitere Merkmale und Details der Erfindung ergeben sich aus den Unteransprüchen, der Beschreibung und den Zeichnungen.

Erfindungsgemäß ist ein Steuerungsverfahren zum Hochfahren eines Brennstoffzellensystem nach einem Stillstand vorgesehen. Dabei umfasst das System typischerweise wenigstens einen Brennstoffzellenstapel mit einem Kathodenzuführabschnitt zum Zuführen eines Kathodenzufuhrgases, einem Kathodenabführabschnitt zum Abführen eines Kathodenabfuhrgases, einem Anodenzuführabschnitt zum Zuführen eines Anodenzufuhrgases und einem Anodenabführabschnitt zum Abführen eines Anodenabfuhrgases; sowie einen Gleichspannungswandler zur Spannungserhöhung zwischen einer Ausgangsspannung des Brennstoffzellenstapels auf einer Niedrigspannungsseite und einer Versorgungsspannung einer Hochspannungsversorgungsleitung auf einer Hochspannungsseite; und einen Schalter zum Öffnen und Schließen einer elektrischen Verbindung zwischen dem Brennstoffzellenstapel und dem Gleichspannungswandler.

Das erfindungsgemäße Steuerungsverfahren zeichnet sich durch die folgenden Schritte aus: ein Zuführen des Anodenzufuhrgases zu dem Anodenzuführabschnitt; zumindest zeitweise, ein Sperren und/oder Drosseln des Kathodenzufuhrgases zu dem Kathodenzuführabschnitt; ein Überwachen einer ansteigenden Leerlaufspannung des Brennstoffzellenstapels bei geöffnetem Schalter der elektrischen Verbindung. Unter der Voraussetzung, dass die Leerlaufspannung eine vorbestimmte zulässige Schwellenspannung in Bezug zu dem Gleichspannungswandler überschreitet, umfasst das Steuerungsverfahren gemäß der Erfindung insbesondere ferner die Schritte eines Durchführens und/oder Fortführens des zumindest zeitweisen Sperrens und/oder Drosselns des Kathodenzufuhrgases solange bis die Leerlaufspannung zurück auf oder unter die zulässige Schwellenspannung abgefallen ist; und eines Schließens des Schalters der elektrischen Verbindung nachdem die Leerlaufspannung zurück auf oder unter die zulässige Schwellenspannung abgefallen ist.

Die Erfindung sieht somit erstmals den Lösungsweg vor, während des Hochfahrens des Brennstoffzellensystems eine Verknappung des Sauerstoffs vorzusehen, und mittels dieser eine Absenkung der Leerlaufspannung zu bewirken bevor die Brennstoffzellenstapel mit dem Gleichspannungswandler verbunden werden.

Die Erfindung beruht ferner auf der Erkenntnis, dass während eines Stillstands des Brennstoffzellensystem Luft in das System eindringt, bzw. vorhandene Luft in dem Kathodenabschnitt sich auch zu dem Anodenabschnitt hin ausbreitet bzw. verteilt. Demnach befindet sich beim Neustart des Brennstoffzellensystems nach einem Stillstand stets Sauerstoff aus der in den Brennstoffzellenstapeln verbliebenen Luft, welcher zum Anlaufen der elektrochemischen Reaktion genutzt werden kann bis diese nach und nach verbraucht ist. Wenn aufgrund einer Sperrung einer Zufuhr neuen Sauerstoffs oder einer deutlichen Verringerung der Oxidationsgaszufuhr gegenüber der Brenngaszufuhr eine Verknappung oder ein Verbrauch des Sauerstoffs in den Brennstoffzellenstapeln einhergeht, lässt der Durchsatz an elektrochemischer Reaktion in den Zellen nach und die Leerlaufspannung wird folglich abgesenkt.

Ein Vorteil der Erfindung besteht darin, dass durch diese Maßnahme die Leerlaufspannung nach einem Anstieg beim Hochfahren des Brennstoffzellensystems durch Begrenzen des Sauerstoffs gesteuert und vor einem Zusammenschluss mit dem Gleichspannungswandler gezielt abgesenkt werden kann, sodass ein Überspannungsschaden an demselben verhindert wird.

Ein weiterer Vorteil der Erfindung besteht darin, dass eine Übersättigung des Brenngases an der Anodenseite erzielt wird, anstelle einer Präsenz von Sauerstoff sowohl an der Kathoden- als auch der Anodenseite. Dadurch kann sicher verhindert werden, dass eine Potenzialumkehr an einer Zelle auftritt sobald die Brennstoffzellenstapel unter ungleichmäßiger Brenngasversorgung mit einer Last verbunden werden, wie es im Stand der Technik der Fall ist.

Gemäß einem vorteilhaften Aspekt der Erfindung kann das Fortführen des zumindest zeitweisen Sperrens und/oder Drosselns des Kathodenzufuhrgases eine Sperrung und/oder Drosselung umfassen, die ab einem Zuführen des Anodenzufuhrgases einsetzt. In bei dieser Variante wird die Zufuhr des Oxidationsgases bzw. der Luft von Vornherein nicht begonnen, bis die Brennstoffzellenstapel elektrisch verbunden sind. So kann das Brennstoffzellensystem so schnell wie möglich hochgefahren und in Betrieb genommen werden.

Gemäß einem alternativen vorteilhaften Aspekt der Erfindung kann das Durchführen des zumindest zeitweisen Sperrens und/oder Drosselns des Kathodenzufuhrgases eine Sperrung und/oder Drosselung umfassen, die einsetzt sobald die Leerlaufspannung die zulässige Schwellenspannung überschreitet. Diese Variante kann bei einer Systemauslegung gewählt werden, bei der nur gelegentlich die Leerlaufspannung kritische Werte überschreitet. Dabei ist gewährleistet, dass nur dann drosselnd in die Gaszufuhr eingegriffen wird, wenn es zum Zwecke des Überspannungsschutzes erforderlich wird.

Gemäß einem darauf aufbauenden vorteilhaften Aspekt der Erfindung kann das zumindest zeitweise Sperren und/oder Drosseln des Kathodenzufuhrgases eine Änderung einer Drosselrate in Reaktion auf das Überwachen der Leerlaufspannung in Bezug zu der zulässigen Schwellenspannung umfassen. Diese Variante erlaubt eine genauere Dosierung der Sauerstoffverknappung an den Zellen, um diese einerseits zur Sicherstellung der elektrochemischen Reaktion ab Beginn, und andererseits im weiteren Verlauf entsprechend der Entwicklung der Leerlaufspannung noch besser steuern zu können.

Gemäß einem konkreten vorteilhaften Aspekt der Erfindung kann das zumindest zeitweise Sperren und/oder Drosseln des Kathodenzufuhrgases ein Erhöhen der Drosselrate in Reaktion auf ein Überschreiten der Leerlaufspannung in Bezug zu der zulässigen Schwellenspannung umfassen. Bei dieser Variante kann zunächst eine geringere Drosselung des Oxidationsgases, und im Falle kritischer Spannungswerte eine höhere Drosselung, oder eine graduelle Änderung der Drosselungsrate in Abhängigkeit einer Anstiegsrate der Leerlaufspannung realisiert werden.

Gemäß einem weiteren vorteilhaften Aspekt der Erfindung kann der Gleichspannungswandler einen Kondensator aufweisen oder mit einem Kondensator verbunden sein, welcher so konfiguriert ist, dass er steuerbar geladen und entladen werden kann; und das Verfahren kann ferner den folgenden Schritt aufweisen: Vorladen des Kondensators vor dem Schließen des Schalters der elektrischen Verbindung. Auf diese Weise wird durch den Kondensator eine elektrische Kapazität zur Verfügung gestellt, welche über den Gleichspannungswandler geladen und entladen werden kann. Diese Lade- und Entladevorgänge sind insbesondere steuerbar ausgebildet.

Gemäß dem vorherigen vorteilhaften Aspekt der Erfindung kann das Steuerungsverfahren in Bezug auf den Kondensator den folgenden Schritt aufweisen: Starten des Vorladens des Kondensators nachdem die Leerlaufspannung die zulässige Schwellenspannung unterschreitet. Dabei kann der Kondensator einen elektrischen Widerstand aufweisen, welcher auch als Pre-charge resistor bezeichnet werden kann, so dass hohe Ströme, insbesondere Stromspitzen, beim Laden und Entladen des Kondensators vermieden oder zumindest geglättet werden können. Sobald die Anode der Brennstoffzelleneinheit versorgt wird, steigt die Spannung an. Anschließend wird abgeartet bis der Schwellenwert unterschritten wird, um die Vorladung des Kondensators durchzuführen. Im Anschluss an die Vorladung erfolgt das Schließen der Schaltvorrichtung. Bei dieser Variante kann der Einsatz des Kondensators nur vorbehaltlich in Fällen eingesetzt werden, in denen die Leerlaufspannung kritische Spannungswerte einnimmt.

Gemäß dem vorherigen vorteilhaften Aspekt der Erfindung kann ein Verbinden des Kondensators mit der Hochspannungsseite des Gleichspannungswandlers zum Vorladen des Kondensators an der Hochspannungsversorgungsleitung erfolgen.

Anderenfalls kann gemäß dem vorherigen vorteilhaften Aspekt der Erfindung ein Verbinden des Kondensators mit der Niedrigspannungsseite des Gleichspannungswandlers zum Vorladen des Kondensators an dem Brennstoffzellenstapel erfolgen.

Gemäß einem vorteilhaften Aspekt der Erfindung kann die zulässige Schwellenspannung in Bezug auf eine technisch bedingte, maximale Betriebsspannung des Gleichspannungswandlers auf der Niedrigspannungsseite vorbestimmt sein.

Dabei kann die zulässige Schwellenspannung unter oder gleich der maximalen Betriebsspannung einer Siliziumkarbid (SiC) basierten Halbleiterschaltung des Gleichspannungswandlers vorbestimmt und/oder innerhalb eines Bereichs von 700 V bis 900 V, vorzugsweise auf oder unter etwa 800 V, voreingestellt sein.

Alternativ kann dabei die obere Schwellenspannung unter oder gleich der maximalen Betriebsspannung einer Galliumnitrid (GaN) basierten Halbleiterschaltung des DC/DC-Wandlers vorbestimmt und/oder innerhalb eines Bereichs von 1100 V bis 1300 V, vorzugsweise auf oder unter etwa 1200 V, voreingestellt sein.

Ebenfalls Gegenstand der Erfindung sind eine Steuerungsvorrichtung für ein Brennstoffzellensystem und eine Computerprogrammprodukt, durch welche die Schritte des erfindungsgemäßen Steuerungsverfahrens beim Hochfahren des Brennstoffzellensystems umgesetzt werden können.

Damit bringen die Steuerungsvorrichtung und das Computerprogrammprodukt die gleichen Vorteile mit sich, wie sie ausführlich mit Bezug auf das erfindungsgemäße Steuerungsverfahren erläutert worden sind.

Weitere Vorteile, Merkmale und Einzelheiten der Erfindung ergeben sich aus der nachfolgenden Beschreibung, in der unter Bezugnahme auf die Zeichnungen, Ausführungsbeispiele der Erfindung im Einzelnen beschrieben sind. Es zeigen schematisch:
- Fig. 1: ein schematisches Blockschaltbild eines Abschnitts eines Brennstoffzellensystems, in dessen Systemkontext das erfindungsgemäße Steuerungsverfahren umgesetzt wird,
- Fig. 2: einen Vergleich von Diagrammen der Spannungs- und Stromverläufe beim Hochfahren von Brennstoffzellenstapeln mit und ohne Luft am Anodenzuführabschnitt und bei Anwendung des erfindungsgemäßen Steuerungsverfahrens, und
- Fig. 3: ein Diagramm der Spannungs- und Stromverläufe sowie Gaszufuhrparametern über einzelne Phasen des erfindungsgemäßen Steuerungsverfahrens hinweg.

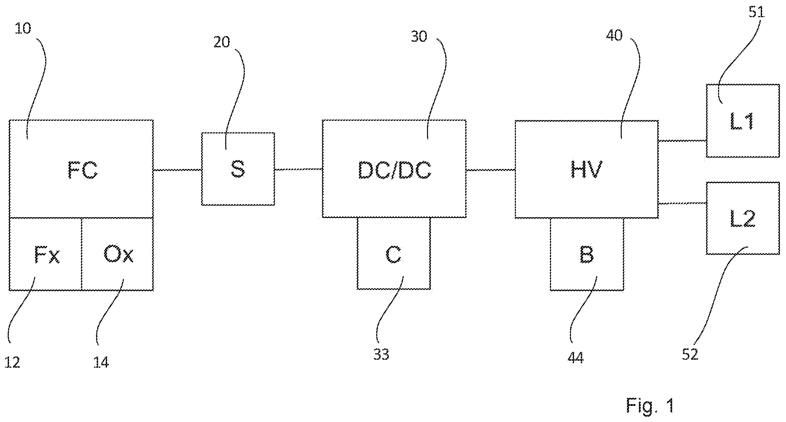

Figur 1 zeigt einen für das Steuerungsverfahren relevanten Abschnitt eines Brennstoffzellensystem, der als Blockschaltbild schematisch dargestellt ist. Das Brennstoffzellensystem umfasst eine Brennstoffzelleneinheit 10 mit Brennstoffzellenstapeln, die jeweils einen nicht weiter dargestellten Anodenabschnitt und einen Kathodenabschnitt aufweisen. Der Anodenabschnitt jedes Brennstoffzellenstapels ist mit einem Anodenzuführabschnitt 12 zum Zuführen von Anodenzufuhrgas verbunden, der in bekannter Weise ein Brennstoffgas (Fx), insbesondere Wasserstoff zuführt. Der Kathodenabschnitt jedes Brennstoffzellenstapels 10 ist mit einem Kathodenzuführabschnitt 14 zum Zuführen von Kathodenzuführgas verbunden, der ein Oxidationsgas (Ox), insbesondere sauerstoffhaltige Luft zuführt. Zudem ist der jeweilige Kathodenabschnitt mit einem Kathodenabführabschnitt zum Abführen von Kathodenabgas, und der jeweilige Anodenabschnitt mit einem Kathodenabführabschnitt zum Abführen von Kathodenabgas verbunden (nicht weiter dargestellt). Die Brennstoffzelleneinheit 10 ist in der vorliegenden Ausführungsform für eine großdimensionierte Leistungserzeugung ausgelegt, wie beispielsweise einer stationären oder halbstationären bzw. nautischen Anwendung, also einer autarken Gebäudeversorgung oder für Antriebe von Schiffen und sonstigen Schwerlast-Nutfahrzeugen einschließlich Bordnetz und Verbrauchern. Die Brennstoffzelleneinheit 10 kann unter Last auf einen Hauptbetriebspunkt in einem Hochspannungsbereich, beispielsweise um etwa 750 V oder um etwa 1100 V ausgelegt sein.

Die Brennstoffzelleneinheit 10 dient zur Erzeugung von elektrischer Leistung für einen Hochspannungsversorgungsabschnitt 40 des Brennstoffzellensystems. Der Hochspannungsversorgungsabschnitt 40 führt eine Gleichstromleistung mit einer hohen Versorgungsspannung an Verbrauchern zu, die an einem Antriebsstrang, einem Bordnetz oder einem Versorgungsnetz eines Gebäudes. Bei der dargestellten Ausführungsform sind eine erste Last 51, z.B. stellvertretend für einen elektrischen Antrieb, und eine zweite Last 52, z.B. stellvertretend für eine Klimatisierungsanlage, mit dem Hochspannungsversorgungsabschnitt 40 verbunden um aus der Brennstoffzelleneinheit 10 erzeugte Leistung zu beziehen. Der Hochspannungsversorgungsabschnitt 40 ist ferner mit einem Batteriespeicher 44 verbunden, der Schwankungen einer dynamischen Lastanforderung zwischen Erzeugung und Verbrauch ausgleicht und einen Spannungspegel der Versorgungsspannung stabilisiert.

Zwischen der Brennstoffzelleneinheit 10 und dem Hochspannungsversorgungsabschnitt 40 ist ein Gleichspannungswandler 30 bereitgestellt. Der Gleichspannungswandler 30 dient als Spannungsbooster, der eine lastabhängig variierende Ausgangsspannung der Brennstoffzelleneinheit 10 auf die Versorgungsspannung anhebt. Der Gleichspannungswandler 30 weist hierzu eine Niedrigspannungsseite auf, an der die erzeugte Leistung der Brennstoffzelleneinheit 10 zugeführt wird, und eine Hochspannungsseite, welche die Leistung mit erhöhter Spannung an den Hochspannungsversorgungsabschnitt 40 weiterführt. Alternativ ist als Gleichspannungswandler 30 auch eine Ausführungsform "Buck/Boost" denkbar, wobei auf beiden Seiten ähnliche Spannungen anliegen. Auch eine solche Ausführungsform ist von der vorliegenden Erfindung umfasst. Ferner umfasst der Gleichspannungswandler 30 einen Kondensator 33, dessen Kapazität dazu beiträgt, eine leistungsabhängige Schwankung der Ausgangsspannung der Brennstoffzelleneinheit 10 gegenüber der Versorgungsspannung des Hochspannungsversorgungsabschnitts 40 zu glätten oder Spannungs- und Stromspitzen zwischen der Niedrigspannungsseite und der Hochspannungsseite , die z.B. bei Schaltvorgängen in elektrischen Verbindungen des Brennstoffzellensystems auftreten können, zu kompensieren.

Der Gleichspannungswandler 30 umfasst ferner zur variablen Spannungswandlung eine Leistungselektronik mit Transistoren, die auf einem Halbleiter aus Siliziumkarbid (SiC) oder Galliumnitrid (GaN) ausgeführt sind. Technisch bedingt durch eine maximalen Sperrspannung zwischen den Bandlücken dieser Halbleitermaterialien, sind Grenzen einer maximalen zulässigen Betriebsspannung Umax gesetzt, welche an der Leistungselektronik angelegt werden können, ohne das Schaltkreise Schaden nehmen. Nach derzeitigem Stand der Technik liegen die maximalen zulässige Spannungen für die Halbleitertechnik von Siliziumkarbid (SiC) und Galliumnitrid (GaN) bei ca. 800 V bzw. 1200 V.

Eine elektrische Verbindung zwischen der Brennstoffzelleneinheit 10 und dem Gleichspannungswandler 30 ist durch eine Schaltvorrichtung 20 trennbar. Die Schaltvorrichtung 20 ist mit einer hochspannungsgeeigneten Schaltertechnik, wie beispielsweise als Schutzschalter ausgeführt. Die Schaltvorrichtung 20 wird unter anderem während eines Stillstands des Brennstoffzellensystems, bei dem die Brennstoffzelleneinheit 10 einen Ruhezustand ohne Gaszufuhr einnimmt, getrennt. Demzufolge muss die Schaltvorrichtung 20 bei einer erneuten Inbetriebnahme nach einem Stillstand des Brennstoffzellensystems wieder geschlossen werden, bevor die erzeugte Leistung der Brennstoffzelleneinheit 10 an der ersten Last 51 und der zweiten Last 52 zugeführt werden kann.

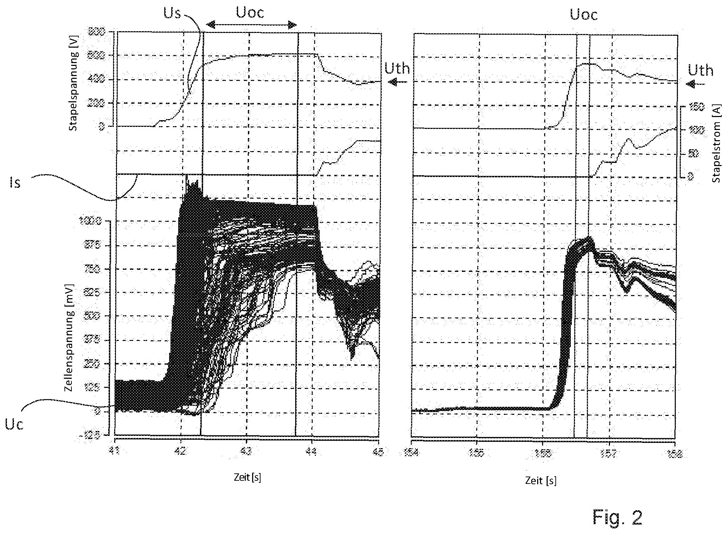

Fig. 2 zeigt in zwei Diagrammen einen Vergleich zwischen Parametern, die sich beim Hochfahren von Brennstoffzellenstapeln mit (links) und ohne (rechts) Luft am Anodenzuführabschnitt und bei Anwendung des erfindungsgemäßen Steuerungsverfahrens ergeben.

Je nach Ausführung der Leitungs-, Dichtungs- und Ventiltechnik in dem Brennstoffzellensystem ist nach einem Stillstand des Brennstoffzellensystems von wenigstens mehreren Stunden, insbesondere ab einem Stillstand von etwa einem Tag davon auszugehen, dass Luft in der gesamten Brennstoffzelleneinheit 10 eingedrungen oder durch Membrane diffundiert ist. Mit anderen Worten bedeutet das, dass sich nicht nur in dem Kathodenabschnitt der Brennstoffzellenstapel Luft befindet, sondern sich diese auch zu dem Anodenabschnitt ausgebreitet hat.

Wenn ein Neustart des Brennstoffzellensystems vorgenommen wird, erfolgt eine Zuführung von Brenngas über den Anodenzuführabschnitt 12 und von Oxidationsgas über den Kathodenzuführabschnitt 14, um die elektrochemische Reaktion in den Zellen zu Starten und die Leistungserzeugung hochzufahren. Bei herkömmlicher Betriebsweise wird dementsprechend fortgefahren, wobei sich auch in einem Versorgungszustand, bei dem noch Luft an der Kathodenseite und der Anodenseite der Zellen vorhanden ist, vergleichsweise früh eine hohe Leerlaufspannung Uoc auftritt, wie anhand der oberen Spannungskurve für die Stapelspannung Us und der unteren Schar an Spannungskurven für die einzelnen Zellenspannungen Uc in dem linken Diagramm der Fig. 2 ersichtlich wird.

Wenn die Leerlaufspannung Uoc der Brennstoffzelleneinheit 10 bzw. eines Brennstoffzellenstapels eine vorbestimmte Schwellenspannung Uth von beispielsweise 400 V überschreitet, wird eine Spannungsbegrenzung (auch sogenanntes "Voltage-Clipping") durchgeführt, in dem ein eingestellter Stapelstrom Is an dem Brennstoffzellenstapel abgeführt wird. Dieser Stapelstrom Is, der durch eine Kurve im mittleren Bereich des Diagramms aufgetragen ist, wird durch eine künstliche Last (auch sogenannte "Dummy Load") bzw. einen Widerstand abgeführt, der hierzu mit dem Brennstoffzellenstapel elektrisch verbunden wird, oder aber durch Verbindung mit dem Gleichspannungswandler 30, welcher Leistung zu den Lasten des Brennstoffzellensystems abführt. Dieser Vorgang wird zweckdienlich geregelt, um langfristig Schäden an den Zellen durch hohe Leerlaufspannungen Uoc zu vermeiden. Infolge der gesteuerten Leistungsabführung mittels des Stapelstroms Is sinkt die Leerlaufspannung Uoc im dargestellten Verlauf von etwa 600 V auf die Schwellenspannung 400 V bzw. zwischenzeitlich darunter ab.

Infolge einer noch nicht vollständigen Versorgung bzw. inhomogenen Ausbreitung des Brenngases an sämtlichen Zellen des Brennstoffzellenstapels während des Hochfahrens kann noch an einigen Zellen sowohl auf der Kathodenseite als auch auf der Anodenseite Luft vorhanden sein. In diesem Zustand, der als partielle Brennstoffarmut betrachtet werden kann, besteht an betreffenden Zellen das Risiko, dass unter der angelegten elektrischen Lastanforderung zur Spannungsbegrenzung eine Potenzialumkehr mit irreversiblen Schäden an der Membran der Zellen auftritt. Dabei stellt die breite Streuung der unteren Schar von Spannungskurven der einzelnen Zellenspannungen Uc ein Indiz einer inhomogenen Brenngasverteilung in den Brennstoffzellen stapeln dar, wobei diejenigen Spannungskurven mit einem flacheren Verlauf bzw. der niedrigsten Spannungsspitze konkret auf Zellen zurückzuführen sind, die einer Brennstoffarmut und folglich dem Risiko einer Potenzialumkehr beim Anlegen einer Lastanforderung ausgesetzt sind.

In dem rechten Diagramm sind die entsprechenden Parameter der Stapelspannung Us, einzelner Zellenspannungen Uc und des Stapelstrom Is über derselben Zeitachse aufgetragen, welche bei der Durchführung des erfindungsgemäßen Steuerungsverfahrens auftreten. Wenn beim Neustart des Brennstoffzellensystems eine Zuführung des Brenngases über den Anodenzuführabschnitt 12 gestartet wird, bleibt bei der vorliegenden Ausführungsform in beiden Fällen (links und rechts in der Fig. 2) eine Zuführung des Oxidationsgases über den Kathodenzuführabschnitt 14 zunächst gesperrt. Die rechte Seite der Fig. 2 zeigt eine Situation, bei welcher weder auf der Anodenseite noch auf der Kathodenseite der Brennstoffzelleneinheit 10 Sauerstoff vorhanden ist. Die Spannung steigt daher erst an, wenn die Versorgung der Kathodenseite startet. In diesem Fall findet die Begrenzung Spannung statt. Wie anhand der oberen Spannungskurve für die Stapelspannung Us und der unteren Schar an Spannungskurven für die einzelnen Zellenspannungen Uc in dem rechten Diagramm der Fig. 2 ersichtlich ist, werden dabei aufgrund des fehlenden Sauerstoffs an der Anode etwas geringere Werte der Leerlaufspannung Uoc eingenommen, wobei eine Streuung in der unteren Schar von Spannungskurven erheblich geringer ist. Letzteres liegt an dem Umstand einer homogeneren Brenngasverteilung in den Brennstoffzellenstapeln, da durch den zeitlichen Vorlauf einer ausschließlichen oder zumindest überwiegenden Gaszuführung von Brenngas gegenüber dem Oxidationsgas, eine Sättigung mit Brenngas auf der Anodenseite forciert wird (In beiden in der Fig. 2 dargestellten Fällen). Infolge der Versorgung mit Sauerstoff in dem Brennstoffzellenstapel in der rechten Seite der Fig. 2 steigt die Spannung an.

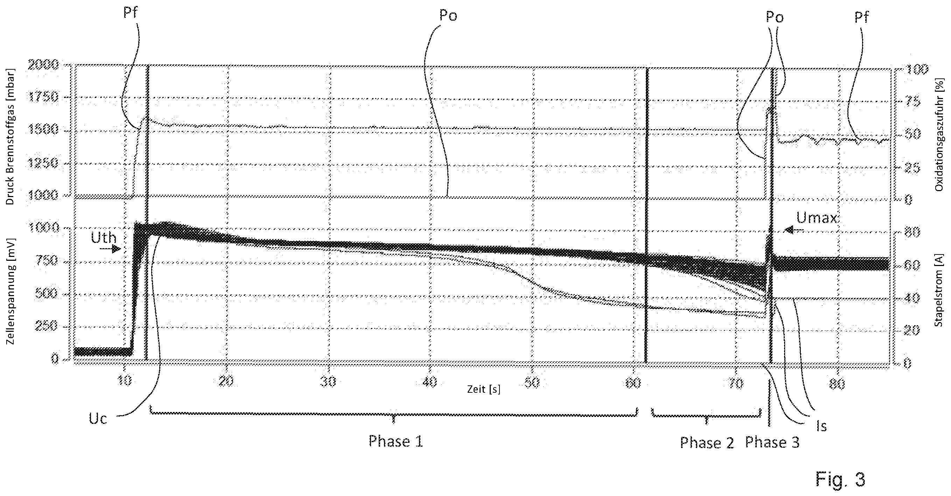

Fig. 3 zeigt drei Phasen des erfindungsgemäßen Steuerungsverfahrens beim Hochfahren des Brennstoffzellensystems. Dabei sind in einem unteren Abschnitt eine Schar von Zellenspannung Uc einzelner Zellen in einem Brennstoffzellenstapel und ein Stapelstrom Is über der Zeitachse aufgetragen, und in meinem oberen Abschnitt sind der Druck des zugeführten Brenngases Pf sowie der Druck des zugeführten Oxidationsgases Po am Brennstoffzellenstapel ersichtlich.

Die Phase 1 entspricht im Wesentlichen dem Vorgang des Steuerungsverfahrens, der zuvor im Zusammenhang mit der Fig. 2 beschrieben wurde. Durch eine andere Dimensionierung des Brennstoffzellensystems sind jedoch die Leerlaufspannungswerte höher als in Fig. 1. Die Gemeinsam mit dem Druck Pf der geöffneten Brenngaszufuhr steigt die Leerlaufspannung Uoc in dem System von Fig. 2 auf über 1000 V, wobei eine maximale zulässige Betriebsspannung Umax des zugehörigen Gleichspannungswandlers 30 auf der Niedrigspannungsseite bei etwa 1000 V liegt, und eine in Bezug hierauf vorbestimmte Schwellenspannung Uth auf etwa 800 V festgelegt ist.

Nach etwa 10 Sekunden Anlaufzeit auf der Zeitachse wird die Brenngaszufuhr gestartet und Phase 1 beginnt, worauf hin die Leerlaufspannung Uoc durch Zunahme der elektrochemische Reaktion in den Zellen unter Verbrauch des in den Brennstoffzellenstapel befindlichen Sauerstoffs rasch ansteigt. Ohne eine Leistung abzuführen, verbleibt die Leerlaufspannung Uoc über einen Zeitraum der Phase 1 auf einem hohen Niveau zwischen 1000 V und 800 V. Aufgrund des Aufbrauchens des Sauerstoffs nimmt die elektrochemische Reaktion in den Zellen ab, sodass während einer Wartedauer von bis zu 60 Sekunden die Leerlaufspannung Uoc allmählich auf etwa 800 V absinkt. Zwar nimmt diese Wartedauer eine gewisse Verzögerung beim Hochfahren des Brennstoffzellensystems in Anspruch, und die Zellen verbleiben währenddessen auf einer hohen Leerlaufspannung Uoc, jedoch stellt dieser Umstand in Erwägung der Risiken, auch in langfristiger Betrachtung, ein geringeres Schadenpotenzial als eine hierdurch vermiedene Potenzialumkehr dar, welche unmittelbar mit irreversiblen Schäden von Zellen verbunden wäre.

Ab einem Absinken der Zellenspannungen UC von dem Niveau einer Leerlaufspannung Uoc auf die Schwellenspannung Uth, wird in der darauf folgenden, optionalen Phase 2 ferner begonnen, den Kondensator 33 des Gleichspannungswandlers 30 aufzuladen. Durch den Einsatz des Kondensators 33 zusammen mit einem Widerstand für den Vorgang des Ladens und Entladens kann das Auftreten einer Spannungsspitze auf der Niedrigspannungsseite des Gleichspannungswandlers 30 bei einem Schaltvorgang zur elektrischen Verbindung vermindert und damit der Kondensator 33 geschützt werden.

Am Ende der Phase 2 wird die Oxidationsgaszufuhr geöffnet, wie durch die senkrecht ansteigende Kurve Po des Oxidationsgasdrucks gekennzeichnet ist, und unmittelbar darauf wird die Schaltvorrichtung 20 betätigt, um die Brennstoffzelleneinheit 10 mit dem Gleichspannungswandler 30 zu verbinden. Dabei kommt es zu einem erneuten Anstieg der Leerlaufspannung Uoc der Brennstoffzelleneinheit 10, die jedoch durch die zuvor bewirkte Absenkung auf eine gewisse Spannungsdifferenz unterhalb der maximalen zulässige Betriebsspannung Umax des Gleichspannungswandlers 30 und eine rasche gesteuerte Abfolge der Vorgänge des Startens der Oxidationsgaszufuhr und des Schließens der Schaltvorrichtung 20 kontrollierbar ist.

Je nach Konfiguration und Steuerung einer Ladeschaltung des Kondensators 33, insbesondere wenn der Kondensator 33 über eine Ladeschaltung zur Niedrigstromseite des Gleichspannungswandlers 30 aus einem Stapelstrom Is geladen wird, der von einem Brennstoffzellenstapel aus der Brennstoffzelleneinheit 10 abgeführt wird, kann hierdurch die Leerlaufspannung Uoc nochmals weiter gesenkt werden. Der Kondensator 33 ist insbesondere auf der Niederspannungsseite angeordnet. Jedoch ist auch eine Anordnung auf der Hochspannungsseite denkbar, wobei die Vorladung durch entsprechende Verschaltung gewährleistet wird. Durch die resultierende höhere Spannungsdifferenz kann danach bei einem Schließen der Schaltvorrichtung 20 noch höherer Sicherheit ein Überschreiten der maximalen zulässigen Betriebsspannung Umax des Gleichspannungswandlers 30 verhindert werden.

Phase 3 stellt im Wesentlichen den Beginn des vollständig hochgefahrenen lastfähigen Betriebszustand des Brennstoffzellensystems dar, wobei im weiteren Verlauf zumindest der Druck der Brenngaszufuhr Pf an der Brennstoffzelleneinheit 10 in Abhängigkeit einer angeforderten Gesamtleistung der ersten Last 51 und der zweiten Last 52 aus dem Hochspannungsversorgungsabschnitt 40 variabel eingestellt wird. Somit ist ein Betriebspunkt der zu erzeugenden Leistung auf einem einheitlichen Spanungspegel durch Unterstützung der variablen Spannungswandlung des Gleichspannungswandlers 30 und des Batteriespeichers 40 möglich.

In einer Ausführungsform ist für den Schritt des Vorladens des Kondensators 33 des Gleichspannungswandlers 30 in dem Steuerungsverfahren ein Verbinden des Kondensators 33 mit der Hochspannungsseite, anstelle eines Verbindens mit der Niedrigspannungsseite vorgesehen. Durch eine dementsprechende Konfiguration einer Ladeschaltung wird der Kondensator 33 aus dem Hochspannungsversorgungsabschnitt 40 bzw. aus dem Batteriespeicher 44 geladen und nicht aus der Brennstoffzelleneinheit 10, sodass der Ladevorgang unabhängig von einem Schließen der Schaltvorrichtung 20 erfolgen kann. Das Laden auf der Hochspannungsseite kann kontrollierter und/oder schneller erfolgen als von der Seite der Brennstoffzelleneinheit 10.

In einer alternativen Ausführungsform ist die in Bezug zu dem Gleichspannungswandler 30 vorbestimmte, zulässige Schwellenspannung Uth nicht unterhalb der technisch bedingten, maximalen Betriebsspannung Umax einer Halbleiterschaltung der Leistungselektronik in dem Gleichspannungswandler 30 ausgelegt, sondern die zulässige Schwellenspannung Uth entspricht im Wesentlichen der maximalen Betriebsspannung Umax.

In einer vorrichtungstechnischen Ausführungsform wird das Steuerungsverfahren durch eine dezidierte Steuerungsvorrichtung (nicht dargestellt) durchgeführt, welche mit den betreffenden Systemkomponenten des Brennstoffzellensystems, d.h. mit der Brennstoffzelleneinheit 10 einschließlich dem Anodenzuführabschnitt 12 und dem Kathodenzuführabschnitt 14, der Schaltvorrichtung 20, dem Gleichspannungswandler 30 einschließlich Kondensator 33 und einer Ladeschaltung desselben, dem Hochspannungsversorgungsabschnitt 40 einschließlich dem Batteriespeicher 44 und den Lasten 51, 52, insbesondere mit Stellgliedern, Sensoren und/oder Schaltungen derselben zumindest in einer Signalverbindung, um die Verfahrensschritte anzuweisen oder auch zu steuern.

In einer alternativen vorrichtungstechnischen Ausführungsform wird das Steuerungsverfahren durch eine externe Steuerungsvorrichtung in einer Systemumgebung des Brennstoffzellensystems (nicht dargestellt) durchgeführt, welche zumindest über die zuvor genannten Signalverbindung mit den betreffenden Systemkomponenten indirekt oder direkt in Verbindung steht, wobei die zuvor genannte dezidierte Steuerungsvorrichtung bzw. das Steuerungsverfahren mittels eines Computerprogramms auf der Hardware der externen Steuerungsvorrichtung umgesetzt wird.

Die voranstehenden Erläuterungen der Ausführungsformen beschreiben die vorliegende Erfindung ausschließlich im Rahmen von Beispielen.

### Bezugszeichenliste

- 10: Brennstoffzelleneinheit
- 12: Anodenzuführabschnitt
- 14: Kathodenzuführabschnitt
- 20: Schaltvorrichtung
- 30: Gleichspannungswandler
- 33: Kondensator
- 40: Hochspannungsversorgungsabschnitt
- 44: Batteriespeicher
- 51: erste Last
- 52: zweite Last

- Uoc: Leerlaufspannung
- Uth: Schwellenspannung
- Umax: maximale zulässige Betriebsspannung
- Uc: Zellenspannung
- Us: Stapelspannung
- Is: Stapelstrom
- Pf: Brenngaszufuhrdruck
- Po: Oxidationsgaszufuhrdruck

## Patentansprüche

1. Steuerungsverfahren zum Hochfahren eines Brennstoffzellensystems nach einem Stillstand, wobei das Brennstoffzellensystem umfasst:
eine Brennstoffzelleneinheit (10) mit Brennstoffzellenstapeln, die jeweils einen Kathodenzuführabschnitt (14) zum Zuführen eines Kathodenzufuhrgases, einen Kathodenabführabschnitt zum Abführen eines Kathodenabfuhrgases, einen Anodenzuführabschnitt (12) zum Zuführen eines Anodenzufuhrgases und einen Anodenabführabschnitt zum Abführen eines Anodenabfuhrgases aufweisen; einen Gleichspannungswandler (30) zur Spannungserhöhung zwischen einer Ausgangsspannung der Brennstoffzelleneinheit (10) auf einer Niedrigspannungsseite und einer Versorgungsspannung eines Hochspannungsversorgungsabschnitts (40) auf einer Hochspannungsseite; und eine Schaltvorrichtung (20) zum Öffnen und Schließen einer elektrischen Verbindung zwischen der Brennstoffzelleneinheit (10) und dem Gleichspannungswandler (30), aufweisend die folgenden Schritte:
Zuführen des Anodenzufuhrgases zu dem Anodenzuführabschnitt (12);
zumindest zeitweise, Sperren und/oder Drosseln des Kathodenzufuhrgases zu dem Kathodenzuführabschnitt (14);
Überwachen einer ansteigenden Leerlaufspannung (Uoc) eines Brennstoffzellenstapels bei geöffneter Schaltvorrichtung (20) der elektrischen Verbindung; und
wenn die Leerlaufspannung (Uoc) eine vorbestimmte zulässige Schwellenspannung (Uth) in Bezug zu dem Gleichspannungswandler (30) überschreitet:
Durchführen und/oder Fortführen des zumindest zeitweisen Sperrens und/oder Drosselns des Kathodenzufuhrgases, solange bis die Leerlaufspannung (Uoc) zurück auf oder unter die zulässige Schwellenspannung (Uth) abgefallen ist; und
Schließen der Schaltvorrichtung (20) der elektrischen Verbindung, nachdem die Leerlaufspannung (Uoc) zurück auf oder unter die zulässige Schwellenspannung (Uth) abgefallen ist.

2. Steuerungsverfahren zum Hochfahren eines Brennstoffzellensystems nach Anspruch 1, wobei das Fortführen des zumindest zeitweisen Sperrens und/oder Drosselns des Kathodenzufuhrgases eine Sperrung und/oder Drosselung umfasst, die ab einem Zuführen des Anodenzufuhrgases einsetzt.

3. Steuerungsverfahren zum Hochfahren eines Brennstoffzellensystems nach Anspruch 1, wobei das Durchführen des zumindest zeitweisen Sperrens und/oder Drosselns des Kathodenzufuhrgases eine Sperrung und/oder Drosselung umfasst, die einsetzt sobald die Leerlaufspannung (Uoc) die zulässige Schwellenspannung (Uth) überschreitet.

4. Steuerungsverfahren zum Hochfahren eines Brennstoffzellensystems nach einem der vorhergehenden Ansprüche, wobei das zumindest zeitweise Sperren und/oder Drosseln des Kathodenzufuhrgases ein Erhöhen einer Drosselrate in Reaktion auf ein Überschreiten der Leerlaufspannung (Uoc) in Bezug zu der zulässigen Schwellenspannung (Uth) umfasst.

5. Steuerungsverfahren zum Hochfahren eines Brennstoffzellensystems nach einem der vorhergehenden Ansprüche, wobei das zumindest zeitweise Sperren und/oder Drosseln des Kathodenzufuhrgases eine Änderung der Drosselrate in Reaktion auf das Überwachen der Leerlaufspannung (Uoc) in Bezug zu der zulässigen Schwellenspannung (Uth) umfasst.

6. Steuerungsverfahren zum Hochfahren eines Brennstoffzellensystems nach einem der vorhergehenden Ansprüche, wobei der Gleichspannungswandler (30) einen Kondensator (33) aufweist oder mit einem Kondensator (33) verbunden ist, welcher so konfiguriert ist, dass er steuerbar geladen und entladen werden kann; und das Verfahren ferner den folgenden Schritt aufweist:
Vorladen des Kondensators (33) vor dem Schließen der Schaltvorrichtung (20) der elektrischen Verbindung.

7. Steuerungsverfahren zum Hochfahren eines Brennstoffzellensystems nach Anspruch 6, ferner aufweisend den folgenden Schritt:
Starten des Vorladens des Kondensators (33) nachdem die Leerlaufspannung (Uoc) die zulässige Schwellenspannung (Uth) unterschreitet.

8. Steuerungsverfahren zum Hochfahren eines Brennstoffzellensystems nach Anspruch 6 oder 7, ferner aufweisend den folgenden Schritt:
Verbinden des Kondensators (33) mit der Niedrigspannungsseite des Gleichspannungswandlers (30) zum Vorladen des Kondensators (33) an der Brennstoffzelleneinheit (10).

9. Steuerungsverfahren zum Hochfahren eines Brennstoffzellensystems nach Anspruch 6 oder 7, ferner aufweisend den folgenden Schritt:
Verbinden des Kondensators (33) mit der Hochspannungsseite des Gleichspannungswandlers (30) zum Vorladen des Kondensators (33) an dem Hochspannungsversorgungsabschnitt (40).

10. Steuerungsverfahren zum Hochfahren eines Brennstoffzellensystems nach einem der vorhergehenden Ansprüche, wobei die zulässige Schwellenspannung (Uth) in Bezug auf eine technisch bedingte, maximale Betriebsspannung (Umax) des Gleichspannungswandlers (30) auf der Niedrigspannungsseite vorbestimmt ist.

11. Steuerungsverfahren zum Hochfahren eines Brennstoffzellensystems nach Anspruch 10, wobei die zulässige Schwellenspannung (Uth) unter oder gleich der maximalen Betriebsspannung (Umax) einer Siliziumkarbid (SiC) basierten Halbleiterschaltung des Gleichspannungswandlers (30) vorbestimmt und/oder innerhalb eines Bereichs von 700 V bis 900 V, vorzugsweise auf oder unter etwa 800 V, voreingestellt ist.

12. Steuerungsverfahren zum Hochfahren eines Brennstoffzellensystems nach Anspruch 10, wobei die zulässige Schwellenspannung (Uth) unter oder gleich der maximalen Betriebsspannung (Umax) einer Galliumnitrid (GaN) basierten Halbleiterschaltung des DC/DC-Wandlers vorbestimmt und/oder innerhalb eines Bereichs von 1100 V bis 1300 V, vorzugsweise auf oder unter etwa 1200 V, voreingestellt ist.

13. Steuerungsvorrichtung zur Steuerung des Brennstoffzellensystems und zur Durchführung der Schritte des Steuerungsverfahrens nach einem der Ansprüche 1 bis 12.

14. Computerprogrammprodukt, das Befehle umfasst, die bei der Ausführung des Programms durch einen Computer oder eine Steuerungsvorrichtung diesen oder diese veranlassen, das Steuerungsverfahren nach einem der Ansprüche 1 bis 12 auszuführen.

## Claims

1. Control method for starting up a fuel cell system after a standstill, wherein the fuel cell system comprises:
a fuel cell unit (10) with fuel cell stacks, each having a cathode supply section (14) for supplying a cathode supply gas, a cathode discharge section for removing a cathode discharge gas, an anode supply section (12) for supplying an anode supply gas, and an anode discharge section for removing an anode discharge gas; a DC-DC converter (30) for voltage increase between an output voltage of the fuel cell unit (10) on a low-voltage side and a supply voltage of a high-voltage supply section (40) on a high-voltage side;
and a switching device (20) for opening and closing an electrical connection between the fuel cell unit (10) and the DC-DC converter (30), comprising the following steps:
supplying the anode supply gas to the anode supply section (12);
at least temporarily, blocking and/or throttling the cathode supply gas to the cathode supply section (14);
monitoring an increasing open-circuit voltage (Uoc) of a fuel cell stack with the switching device (20) of the electrical connection open; and
if the open-circuit voltage (Uoc) exceeds a predetermined permissible threshold voltage (Uth) with respect to the DC-DC converter (30):
performing and/or continuing the at least temporary blocking and/or throttling of the cathode supply gas until the open-circuit voltage (Uoc) has dropped back to or below the permissible threshold voltage (Uth); and
closing the switching device (20) of the electrical connection after the open-circuit voltage (Uoc) has dropped back to or below the permissible threshold voltage (Uth).

2. Control method for starting up a fuel cell system according to claim 1, wherein continuing the at least temporary blocking and/or throttling of the cathode supply gas comprises blocking and/or throttling that begins upon supply of the anode supply gas.

3. Control method for starting up a fuel cell system according to claim 1, wherein performing the at least temporary blocking and/or throttling of the cathode supply gas comprises blocking and/or throttling that begins as soon as the open-circuit voltage (Uoc) exceeds the permissible threshold voltage (Uth).

4. Control method for starting up a fuel cell system according to any of the preceding claims, wherein the at least temporary blocking and/or throttling of the cathode supply gas comprises increasing a throttling rate in response to an exceedance of the open-circuit voltage (Uoc) relative to the permissible threshold voltage (Uth).

5. Control method for starting up a fuel cell system according to any of the preceding claims, wherein the at least temporary blocking and/or throttling of the cathode supply gas comprises changing the throttling rate in response to monitoring the open-circuit voltage (Uoc) relative to the permissible threshold voltage (Uth).

6. Control method for starting up a fuel cell system according to any of the preceding claims, wherein the DC-DC converter (30) comprises or is connected to a capacitor (33) which is configured to be charged and discharged in a controllable manner. and the method further comprises the following step:
pre-charging the capacitor (33) before closing the switching device (20) of the electrical connection.

7. Control method for starting up a fuel cell system according to claim 6, further comprising the following step:
starting the pre-charging of the capacitor (33) after the open-circuit voltage (Uoc) falls below the permissible threshold voltage (Uth).

8. Control method for starting up a fuel cell system according to claim 6 or 7, further comprising the following step:
connecting the capacitor (33) to the low-voltage side of the DC-DC converter (30) for pre-charging the capacitor (33) at the fuel cell unit (10).

9. Control method for starting up a fuel cell system according to claim 6 or 7, further comprising the following step:
connecting the capacitor (33) to the high-voltage side of the DC-DC converter (30) for precharging the capacitor (33) at the high-voltage supply section (40).

10. Control method for starting up a fuel cell system according to any one of the preceding claims, wherein the permissible threshold voltage (Uth) is predetermined with respect to a technically determined maximum operating voltage (Umax) of the DC-DC converter (30) on the low-voltage side.

11. Control method for starting up a fuel cell system according to claim 10, wherein the permissible threshold voltage (Uth) is predetermined and/or preset within a range of 700 V to 900 V, preferably at or below approximately 800 V, and is less than or equal to the maximum operating voltage (Umax) of a silicon carbide (SiC)-based semiconductor circuit of the DC/DC converter (30).

12. Control method for starting up a fuel cell system according to claim 10, wherein the permissible threshold voltage (Uth) is predetermined and/or preset within a range of 1100 V to 1300 V, preferably at or below approximately 1200 V, and is less than or equal to the maximum operating voltage (Umax) of a gallium nitride (GaN)-based semiconductor circuit of the DC/DC converter.

13. Control device for controlling the fuel cell system and for carrying out the steps of the control method according to any one of claims 1 to 12.

14. Computer program product comprising instructions which, when the program is executed by a computer or a control device, cause it or the computer or control device to execute the control method according to any one of claims 1 to 12.

## Revendications

1. Procédé de commande pour le démarrage d'un système de pile à combustible après un arrêt, ce système comprenant :
une pile à combustible (10) comportant des empilements de piles à combustible, chacun comprenant une section d'alimentation cathodique (14) pour l'alimentation en gaz cathodique, une section d'évacuation des gaz cathodiques, une section d'alimentation anodique (12) pour l'alimentation en gaz anodique et une section d'évacuation des gaz anodiques ; un convertisseur CC-CC (30) pour l'élévation de tension entre la tension de sortie de la pile à combustible (10) côté basse tension et la tension d'alimentation d'une section d'alimentation haute tension (40) côté haute tension ; et un dispositif de commutation (20) pour l'ouverture et la fermeture de la connexion électrique entre la pile à combustible (10) et le convertisseur CC-CC (30), comprenant les étapes suivantes :
alimentation en gaz anodique de la section d'alimentation anodique (12) ;
blocage et/ou limitation, au moins temporaire, de l'alimentation en gaz cathodique de la section d'alimentation cathodique (14) ;
où le procédé de commande pour le démarrage d'un système de pile à combustible consiste à surveiller la tension en circuit ouvert (Uoc) croissante d'une pile à combustible, le dispositif de commutation (20) de la connexion électrique étant ouvert ;
si la tension en circuit ouvert (Uoc) dépasse un seuil de tension admissible prédéterminé (Uth) par rapport au convertisseur CC-CC (30) :
effectuer et/ou maintenir le blocage et/ou la limitation, au moins temporaire, de l'alimentation en gaz de la cathode jusqu'à ce que la tension en circuit ouvert (Uoc) retombe à un niveau inférieur ou égal au seuil de tension admissible (Uth) ;
et fermer le dispositif de commutation (20) de la connexion électrique une fois que la tension en circuit ouvert (Uoc) est revenue à un niveau inférieur ou égal au seuil de tension admissible (Uth).

2. Procédé de commande pour le démarrage d'un système de pile à combustible selon la revendication 1, dans lequel le maintien du blocage et/ou de la limitation, au moins temporaire, de l'alimentation en gaz de la cathode comprend un blocage et/ou une limitation qui débutent dès l'alimentation en gaz de l'anode.

3. Procédé de commande de démarrage d'un système de pile à combustible selon la revendication 1, dans lequel le blocage et/ou la limitation, même temporaire, du débit de gaz d'alimentation de la cathode consiste en un blocage et/ou une limitation qui débute dès que la tension en circuit ouvert (Uoc) dépasse la tension de seuil admissible (Uth).

4. Procédé de commande de démarrage d'un système de pile à combustible selon l'une quelconque des revendications précédentes, dans lequel le blocage et/ou la limitation, même temporaire, du débit de gaz d'alimentation de la cathode consiste à augmenter la vitesse de limitation en réponse à un dépassement de la tension en circuit ouvert (Uoc) par rapport à la tension de seuil admissible (Uth).

5. Procédé de commande de démarrage d'un système de pile à combustible selon l'une quelconque des revendications précédentes, dans lequel le blocage et/ou la limitation, même temporaire, du débit de gaz d'alimentation de la cathode consiste à modifier la vitesse de limitation en fonction de la tension en circuit ouvert (Uoc) par rapport à la tension de seuil admissible (Uth).

6. Procédé de commande de démarrage d'un système de pile à combustible selon l'une quelconque des revendications précédentes, dans lequel le convertisseur CC-CC (30) comprend un condensateur (33) ou y est connecté. Ce condensateur est configuré pour être chargé et déchargé de manière contrôlée. Le procédé comprend en outre l'étape suivante :
précharge du condensateur (33) avant la fermeture du dispositif de commutation (20) de la connexion électrique.

7. Procédé de commande de démarrage d'un système de pile à combustible selon la revendication 6, comprenant en outre l'étape suivante :
démarrage de la précharge du condensateur (33) après que la tension en circuit ouvert (Uoc) soit descendue en dessous de la tension de seuil admissible (Uth).

8. Procédé de commande de démarrage d'un système de pile à combustible selon la revendication 6 ou 7, comprenant en outre l'étape suivante :
connexion du condensateur (33) au côté basse tension du convertisseur CC-CC (30) pour la précharge du condensateur (33) au niveau de l'unité de pile à combustible (10).

9. Procédé de commande de démarrage d'un système de pile à combustible selon la revendication 6 ou 7, comprenant en outre l'étape suivante :
connexion du condensateur (33) au côté haute tension du convertisseur CC-CC (30) pour la précharge du condensateur (33) au niveau de l'alimentation haute tension (40).

10. Procédé de commande de démarrage d'un système de pile à combustible selon l'une quelconque des revendications précédentes, dans lequel la tension de seuil admissible (Uth) est prédéterminée par rapport à une tension de fonctionnement maximale (Umax) techniquement déterminée du convertisseur CC-CC (30) côté basse tension.

11. Procédé de commande de démarrage d'un système de pile à combustible selon la revendication 10, dans lequel la tension de seuil admissible (Uth) est prédéterminée et/ou préréglée dans une plage de 700 V à 900 V, de préférence à environ 800 V ou moins, et est inférieure ou égale à la tension de fonctionnement maximale (Umax) d'un circuit semi-conducteur à base de carbure de silicium (SiC) du convertisseur CC/CC (30).

12. Procédé de commande de démarrage d'un système de pile à combustible selon la revendication 10, dans lequel la tension de seuil admissible (Uth) est prédéterminée et/ou préréglée dans une plage de 1 100 V à 1 300 V, de préférence à environ 1 200 V ou moins, et est inférieure ou égale à la tension de fonctionnement maximale (Umax) d'un circuit semi-conducteur à base de nitrure de gallium (GaN) du convertisseur CC/CC.

13. Dispositif de commande pour le pilotage du système de pile à combustible et la mise en œuvre des étapes du procédé de commande selon l'une quelconque des revendications 1 à 12.

14. Programme informatique comprenant des instructions qui, lors de son exécution par un ordinateur ou un dispositif de commande, entraînent l'exécution par ce dernier, cet ordinateur ou ce dispositif de commande, du procédé de commande selon l'une quelconque des revendications 1 à 12.
